# EUROPÄISCHE PATENTSCHRIFT

(11) **EP 4 285 726 B1**
(45) Veröffentlichungstag und Bekanntmachung des Hinweises auf die Patenterteilung: **15.10.2025**
(21) Anmeldenummer: 23174438.4
(22) Anmeldetag: 22.05.2023
(51) Int. Cl.: A21C 5/00

(54) **PORTIONIERWALZENANORDNUNG ZUM ERZEUGEN VON TEIGPORTIONEN**
PORTIONING ROLLER ASSEMBLY FOR PRODUCING DOUGH PORTIONS
ENSEMBLE ROULEAU DE DIVISION POUR PRODUIRE DES PORTIONS DE PÂTE

(30) Priorität: 02.06.2022 DE 102022113969
(43) Veröffentlichungstag der Anmeldung: 06.12.2023
(73) Patentinhaber: Fritsch Bakery Technologies GmbH & Co. KG, 97348 Markt Einersheim (DE)
(72) Erfinder: WAGNER, Alex, 97084 Würzburg (DE); EBERT, Thomas, 97337 Dettelbach (DE)
(74) Vertreter: Grünecker Patent- und Rechtsanwälte PartG mbB

(56) Entgegenhaltungen:
- EP-A1- 3 603 401
- CH-A5- 629 085
- DE-C2- 2 462 906
- DE-C2- 2 650 290
- US-A- 5 427 515

## Beschreibung

Die Erfindung bezieht sich auf Portionierwalzenanordnungen, die zum Abtrennen von Teigportionen aus einer Teigmasse einsetzbar sind.

In der EP 3 603 401 A1 werden eine Vorrichtung und ein Verfahren zum Portionieren einer Teigmasse offenbart. Die offenbarte Vorrichtung umfasst eine Aufnahmekammer zum Aufnehmen der Teigmasse und ein Paar rotierender Schneider, die an einer Auslassöffnung der Aufnahmekammer angeordnet sind. Jeder der Schneider umfasst drei klingen, die um eine Drehachse rotierbar sind. Jeweils eine Klinge der beiden Schneider kooperieren miteinander, sodass durch Rotieren der Schneider eine Teigportion von der Teigmasse abgetrennt werden kann. Die offenbarte Vorrichtung umfasst des Weiteren ein Trennmittelversorgungssystem zum Auftragen eines Trennmittels auf die Klingen. Das Trennmittelversorgungssystemumfasst mehrere Düsen, die zum Aufsprühen des Trennmittels konfiguriert sind. Die Düsen sind parallel zu der Rotationsachse der Schneider verschiebbar. Auch eine Kippbewegung der Düsen wird erwähnt. Die offenbarte Vorrichtung wird als Beitrag zur Reduzierung der Verschmutzung der gesamten Vorrichtung mit Öl präsentiert. Es soll also möglichst wenig Öl an Stellen gelangen, an denen es unerwünscht ist. Dazu wird eine spezielle Konstruktion der Düsen beschrieben, durch die eine Tropfengrößen des versprühten Öls gezielt einstellbar sein soll.

Es ist eine Aufgabe der Erfindung, eine verbesserte Portionierwalzenanordnung anzugeben. Diese Aufgabe wird gelöst durch eine Portionierwalzenanordnung mit den Merkmalen des Anspruchs 1. Vorteilhafte Weiterbildungen sind in den abhängigen Ansprüchen angegeben.

Es wird eine Portionierwalzenanordnung offenbart, die zum Erzeugen von Teigportionen aus einer Teigmasse konfiguriert ist. Die Portionierwalzenanordnung umfasst eine erste Portionierwalze, die mehrere Trennkanten aufweist und um eine erste Rotationsachse rotierbar gelagert ist, sowie eine zweite Portionierwalze, die mehrere Trennkanten aufweist und um eine zweite Rotationsachse rotierbar gelagert ist, wobei die erste und/oder die zweite Portionierwalze jeweils eine Vielzahl von Vertiefungen aufweist, die jeweils zwischen zwei Trennkanten vorgesehen sind. Die Portionierwalzenanordnung umfasst des Weiteren eine Trennmittelaufbringvorrichtung die dazu konfiguriert ist, ein Trennmittel auf eine Oberfläche einer Vertiefung der Vielzahl von Vertiefungen der ersten Portionierwalze aufzubringen. die Trennmittelaufbringvorrichtung umfasst eine Düse, die dazu konfiguriert ist, einen Sprühkegel zu erzeugen. Wenn die erste Portionierwalze in einer Sprühposition angeordnet ist, weist die Düse, einen in einer Sprührichtung, die parallel zu einer Sprühkegelachse des Sprühkegels orientiert ist, gemessenen ersten Abstand von einer ersten die Vertiefung begrenzenden Trennkante auf, der kleiner ist als ein zweiter in der Sprührichtung gemessener Abstand der Düse von einer zweiten die Vertiefung begrenzenden Trennkante. Wenn die erste Portionierwalze in einer Sprühposition angeordnet ist, weist die Düse des Weiteren, einen in einer Querrichtung, die orthogonal zu der Sprührichtung orientiert ist, gemessenen ersten Querabstand von der ersten die Vertiefung begrenzenden Trennkante auf, der kleiner ist als ein zweiter in der Querrichtung gemessener Querabstand der Düse von der zweiten die Vertiefung begrenzenden Trennkante.

Diese Konfiguration kann eine besonders nahe Positionierung der Düse an der Portionierwalze erlauben. Der Sprühkegel weitet sich mit zunehmender Entfernung in der Sprührichtung auf. Durch den größeren Querabstand von der in Sprührichtung weiter von der Düse entfernten Trennkante kann vermieden werden, dass durch die Aufweitung des Sprühkegels Trennmittel über die weiter entfernte Trennkante hinaus gesprüht wird.

Das Verhältnis des zweiten in der Sprührichtung gemessenen Abstands zu dem ersten in der Sprührichtung gemessenen Abstand kann z. B. größer als 1,5, bevorzugt größer als 2,5, besonders bevorzugt größer als 3 sein. Das Verhältnis des zweiten in der Querrichtung gemessenen Querabstands zu dem ersten in der Querrichtung gemessenen Querabstand kann z. B: größer als 1,25, bevorzugt größer als 2, besonders bevorzugt größer als 2,3 ist.

Ein Fachmann erkennt, dass die Trennmittelaufbringvorrichtung dazu konfiguriert sein kann, ein Trennmittel auf eine Oberfläche einer Vertiefung der Vielzahl von Vertiefungen der zweiten Portionierwalze aufzubringen. Die Trennmittelaufbringvorrichtung kann bspw. eine zweite Düse umfassen. Alle bisherigen und folgenden Erläuterungen bzgl. der Düse bzw. der ersten Portionierwalze können analog auf die zweite Düse bzw. die zweite Portionierwalze anwendbar sein.

Vorteilhafterweise kann die Portionierwalzenanordnung des Weiteren eine Abstreifvorrichtung umfassen, die einen Abstreifer und einen Abstreifantrieb umfasst, wobei der Abstreifantrieb dazu konfiguriert ist, den Abstreifer entlang der ersten Portionierwalze und/oder der zweiten Portionierwalze zu bewegen. Durch das Bewegen des Abstreifers entlang der Portionierwalze/n können an den Walzen unerwünscht anhaftende Teigreste entfernt werden. Insbesondere kann der Abstreifer in einer Abstreifrichtung, die parallel zu der Rotationsachse/n der abzustreifenden Portionierwalze/n orientiert sein kann, entlang der Portionierwalze/n bewegbar sein. Einen weiteren Vorteil kann eine Entfernung von überschüssigem Trennmittel, das z. B. nicht mit der erzeugten Teigportion ausgeworfen wurde, darstellen. Auf diese Weise kann eine Ansammlung von Trennmittel in der Portionierwalzenanordnung vermieden werden.

Es ist denkbar, dass die Abstreifvorrichtung einen Abstreifer oder mehrere Abstreifer umfasst. Z. B. kann ein Abstreifer dazu konfiguriert sein, an der ersten und der zweiten Portionierwalze entlang bewegt zu werden, insbesondere um Teigreste an beiden Portionierwalzen zu entfernen. In diesem Fall kann es vorteilhaft sein, wenn der Abstreifer durch einen, vorzugsweise nur einen, Abstreifantrieb antreibbar ist. Es ist außerdem denkbar, dass ein Abstreifer dazu konfiguriert ist, entlang nur der ersten Portionierwalze bewegt zu werden, insbesondere um Teigreste an der ersten Portionierwalze zu entfernen, oder dazu konfiguriert ist entlang nur der zweiten Portionierwalze bewegt zu werden, insbesondere um Teigreste an der zweiten Portionierwalze zu entfernen. Es kann vorteilhaft sein, wenn die Abstreifvorrichtung einen ersten Abstreifer, der dazu konfiguriert ist, entlang nur der ersten Portionierwalze bewegt zu werden, und einen zweiten Abstreifer, der dazu konfiguriert ist entlang nur der zweiten Portionierwalze bewegt zu werden, umfasst. Der erste Abstreifer und der zweite Abstreifer können durch einen gemeinsamen Abstreifantrieb antreibbar sein. Es ist ebenfalls denkbar, dass die Antriebsvorrichtung einen ersten Abstreifantrieb umfasst, der zum Antreiben des ersten Abstreifers konfiguriert sein kann, d. h. dazu konfiguriert sein kann den ersten Abstreifer entlang der ersten Portionierwalze zu bewegen. Die Antriebsvorrichtung kann außerdem einen zweiten Abstreifantrieb umfassen, der zum Antreiben des zweiten Abstreifers konfiguriert sein kann, d. h. dazu konfiguriert sein kann den zweiten Abstreifer entlang der zweiten Portionierwalze zu bewegen.

Es ist denkbar, dass der Abstreifer dazu konfiguriert ist, in eine der Vielzahl von Vertiefungen einzugreifen. Dadurch kann ein möglichst vollständiges Entfernen von Teigresten ermöglicht werden.

Es ist denkbar, dass die Düse entlang der ersten Portionierwalze, insbesondere parallel zu der ersten Rotationsachse, bewegbar ist. Die Portionierwalzenanordnung, insbesondere die Trennmittelaufbringvorrichtung, kann einen Düsenantrieb aufweisen, der dazu konfiguriert sein kann, die Düse entlang der ersten Portionierwalze, insbesondere parallel zu der ersten Rotationsachse, zu bewegen. Es ist außerdem denkbar, dass der Abstreifantrieb dazu konfiguriert ist, die Düse entlang der ersten Portionierwalze, insbesondere parallel zu der ersten Rotationsachse, zu bewegen. Dabei kann es sich um den weiter oben erwähnten ersten Abstreifantrieb handeln, der zum Antreiben des ersten Abstreifers konfiguriert sein kann, d. h. dazu konfiguriert sein kann den ersten Abstreifer entlang der ersten Portionierwalze zu bewegen. Es ist außerdem denkbar, dass es sich um einen ebenfalls weiter oben erläuterten Abstreifantrieb handelt, der dazu konfiguriert ist, den ersten Abstreifer und den zweiten Abstreifer gemeinsam anzutreiben.

Die Düse und die zweite Düse können gemeinsam entlang der ersten Portionierwalze, insbesondere parallel zu der ersten Rotationsachse, bewegbar sein. Der Düsenantrieb kann dazu konfiguriert sein die Düse entlang der ersten Portionierwalze, insbesondere parallel zu der ersten Rotationsachse, und die zweite Düse entlang der zweiten Portionierwalze, insbesondere parallel zu der zweiten Rotationsachse, zu bewegen. Die Düse und die zweite Düse können jedoch auch separat bewegbar sein. Es ist außerdem vorstellbar, dass die Portionierwalzenanordnung, insbesondere die Trennmittelaufbringvorrichtung, einen zweiten Düsenantrieb aufweist, der dazu konfiguriert sein kann, die zweite Düse entlang der zweiten Portionierwalze, insbesondere parallel zu der zweiten Rotationsachse, zu bewegen. Ähnlich der Düse kann die zweite Düse durch den weiter oben erwähnten zweiten Abstreifantrieb bewegbar sein, der der zum Antreiben des zweiten Abstreifers konfiguriert sein kann, d. h. dazu konfiguriert sein kann den zweiten Abstreifer entlang der zweiten Portionierwalze zu bewegen. Es ist außerdem denkbar, dass die zweite Düse durch einen Abstreifantrieb bewegbar ist, der dazu konfiguriert ist, den ersten Abstreifer und den zweiten Abstreifer gemeinsam anzutreiben.

Es kann vorteilhaft sein, wenn ein Verschiebebereich des Abstreifantriebs, in dem der Abstreifer bewegbar ist, in einer Richtung parallel zu der Rotationsachse länger ist als die erste und/oder die zweite Portionierwalze. Dadurch kann ein Verschieben des Abstreifers über zumindest eine Stirnseite einer oder beider Portionierwalzen hinaus ermöglicht werden, wodurch zum einen auch die Teigreste über die besagte Stirnseite hinaus verschoben und so von der Portionierwalze entfernt werden können. Zum anderen kann durch einen derartigen Verschiebebereich der Abstreifer in einer Parkposition angeordnet werden, die ein Rotieren der Portionierwalze bzw. der Portionierwalzen an dem Abstreifer vorbei ermöglicht werden. Als eine Stirnseite einer Portionierwalze kann eine Fläche der Portionierwalze angesehen werden, die im Wesentlichen orthogonal zu der Rotationsachse dieser Portionierwalze orientiert ist. Besonders günstig kann es sein, wenn der Abstreifer über beide Stirnseiten der ersten und/oder zweiten Portionierwalze hinaus verschiebbar ist. Dadurch kann es ermöglicht werden, dass in zwei Verschieberichtungen des Abstreifers Teigreste entfernt werden und auf beiden Seiten der Portionierwalze eine Parkposition vorgesehen werden kann. Dadurch kann eine Beschleunigung des Abstreifvorgangs ermöglicht werden, indem auf ein Zurückverschieben des Abstreifers nach oder vor dem Abstreifen verzichtet werden kann.

Es ist vorstellbar, dass die Portionierwalzenanordnung dazu konfiguriert ist, das Trennmittel auf die Oberfläche einer Vertiefung der Vielzahl von Vertiefungen aufzubringen, nachdem der Abstreifer entlang dieser Vertiefung bewegt wurde. Da mit dem Abstreifer auch Trennmittelreste von der Portionierwalze, insbesondere von der Oberfläche der Vertiefung, entfernbar sein können, kann dadurch ein erneutes Erzeugen eines Trennmittelfilms ermöglicht werden. Insbesondere kann durch ein regelmäßiges Entfernen von Trennmittel von der Portionierwalze, insbesondere von der Oberfläche der Vertiefung, und Wiederauftragen auf die Portionierwalze, insbesondere auf die Oberfläche der Vertiefung, ein reproduzierbarer Trennmittelfilm erreicht werden.

Die Anmeldung bezieht sich auch auf eine Teigportioniervorrichtung umfassend einen Behälter und eine Portionierwalzenanordnung der vorstehend beschriebenen Art.

Die Anmeldung bezieht sich auch auf ein Verfahren zum Auftragen von Trennmittel auf eine Portionierwalze durch eine Trennmittelaufbringvorrichtung, die eine Düse umfasst, die dazu konfiguriert ist, einen Sprühkegel zu erzeugen, wobei die Portionierwalze um eine erste Rotationsachse rotierbar gelagert ist. Das Verfahren umfasst Schwenken der Düse um eine Schwenkachse durch einen Schwenkantrieb und Verschieben der Düse entlang der Portionierwalze durch einen Düsenantrieb nach dem Schwenken der Düse. Ein derartiges Bewegen der Düse kann es ermöglichen, die Düse näher an der mit Trennmittel zu benetzenden Portionierwalze zu positionieren, wodurch ein Anteil des aus der Düse austretenden Trennmittels, welches die Portionierwalze nicht erreicht, verringert werden kann. Durch die nähere Positionierung kann der durch die Düse erzeugte Sprühkegel sich weniger weit öffnen, gleichzeitig kann durch die Verschiebe- und Schwenkbewegung die gesamte zu benetzende Oberfläche der Portionierwalze mit Trennmittel benetzt werden.

Es ist denkbar, dass die Schwenkachse und die Rotationsachse im Wesentlichen parallel zueinander orientiert sind.

Das Verfahren kann des Weiteren Verschieben der Düse vor dem Schwenken der Düse umfassen. Insbesondere kann das Verschieben der Düse vor dem Schwenken der Düse und das Verschieben der Düse nach dem Schwenken der Düse in gleicher oder entgegengesetzter Verschieberichtung erfolgen. Besonders günstig kann es sein, wenn die Düse während des Verschiebens vor und/oder nach dem Schwenken entlang einer gesamten axialen Länge der Portionierwalze verschoben wird. Dies kann insbesondere dann vorteilhaft sein, wenn das Verschieben der Düse vor dem Schwenken der Düse und das Verschieben der Düse nach dem Schwenken der Düse in entgegengesetzter Verschieberichtung erfolgen.

Es wird außerdem ein Verfahren zum Abtrennen einer Teigportion aus einer Teigmasse durch eine Teigportioniervorrichtung mit einem Behälter sowie einer ersten Portionierwalze, die mehrere Trennkanten aufweist, und einer zweiten Portionierwalze, die mehrere Trennkanten aufweist, offenbart. Zwischen zwei Trennkanten ist jeweils eine Vertiefung vorgesehen. Das Verfahren kann umfassen: Rotieren der ersten und der zweiten Portionierwalze in eine Aufnahmeposition, in welcher eine erste Trennkante der ersten Portionierwalze und eine zweite Trennkante der zweiten Portionierwalze einen Aufnahmeabstand zueinander aufweisen, Aufnehmen eines Teils der Teigmasse in zwei dem Behälter zugewandten Vertiefungen der ersten und der zweiten Portionierwalze und Rotieren der ersten und der zweiten Portionierwalze in eine Warteposition, in welcher die erste Trennkante der ersten Portionierwalze und die zweite Trennkante der zweiten Portionierwalze einen Warteabstand zueinander aufweisen. Das Verfahren kann des Weiteren Reduzieren der Rotationsgeschwindigkeiten der ersten und zweiten Portionierwalze und Abwarten einer Wartezeit umfassen. Das Verfahren kann des Weiteren Erhöhen der Rotationsgeschwindigkeiten der ersten und zweiten Portionierwalze und Rotieren der ersten und der zweiten Portionierwalze in eine Abtrennposition, in welcher die erste Trennkante der ersten Portionierwalze und die zweite Trennkante der zweiten Portionierwalze einen Trennabstand zueinander aufweisen, umfassen. Der Aufnahmeabstand kann größer sein als der Warteabstand und der Warteabstand kann größer sein als der Trennabstand.

Durch das Rotieren in die Warteposition kann die Teigportioniervorrichtung zunächst ein Stück weit geöffnet werden, ohne die Teigportion vollständig von der Teigmasse abzutrennen. Während der Wartezeit kann die Teigportion mit dem Ablösen von den Portionierwalzen beginnen. Insbesondere kann die Wartezeit dazu dienen, ein zumindest teilweises Ablösen der Teigmasse abzuwarten. Durch die Weiterrotation in die Trennposition kann dann die Teigportion vollständig abgetrennt werden. Durch dieses Verfahren kann ein Ablösen der Teigportion von Bereichen der Portionierwalzen vor einem Herabfallen der Teigportion aus der Teigportioniervorrichtung ermöglicht werden. Dadurch kann ein geordneteres Herabfallen ermöglicht werden. Außerdem kann das Risiko eines Auseinanderreißens der Teigportion durch Festkleben an sich seitlich nach außen bewegenden Bereichen der Portionierwalzen reduziert werden.

Es ist kann vorteilhaft sein, wenn die Wartezeit einstellbar ist. Dadurch kann die Wartezeit, z. B. an unterschiedliche Teigeigenschaften, die ein unterschiedlich schnelles Ablösen der Teigmasse von den Portionierwalzen hervorrufen können, anpassbar sein. Die Wartezeit kann beispielsweise höchstens 10 Sekunden, vorzugsweise höchstens 5 Sekunden, besonders bevorzugt 2 Sekunden beträgt.

Es ist denkbar, dass die erste Portionierwalze zwischen der Aufnahmeposition und der Warteposition um einen ersten Winkel rotiert wird und die zweite Portionierwalze zwischen der Aufnahmeposition und der Warteposition um einen zweiten Winkel rotiert wird. Besonders günstig kann es sein, wenn der erste und der zweite Winkel gleich groß sind. Dies kann die Steuerung der Rotation vereinfachen. Der erste Winkel kann z. B. 60° bis 80°, vorzugsweise 70° betragen.

Es kann vorteilhaft sein, wenn das Reduzieren der Rotationsgeschwindigkeiten der ersten und zweiten Portionierwalze eine Reduktion um mehr als 50%, vorzugsweise eine Reduktion um mehr als 80% besonders bevorzugt eine Reduktion um mehr als 90% umfasst. Besonders günstig kann es sein, wenn das Reduzieren der Rotationsgeschwindigkeiten der ersten und zweiten Portionierwalze eine Reduktion um 100%, insbesondere ein Anhalten der ersten und/oder zweiten Portionierwalze, umfasst. Eine möglichst starke Reduzierung kann das Ablösen der Teigmasse begünstigen.

Es wird außerdem eine Portionierwalze für eine Teigportioniervorrichtung oder eine Portionierwalzenanordnung der vorstehend beschriebenen Art offenbart. Die Portionierwalze kann zum Portionieren von Teig konfigurierbar und um eine Rotationsachse rotierbar lagerbar sein. Die Portionierwalze kann mehrere Trennkanten aufweisen und jeweils zwischen zwei Trennkanten kann jeweils eine Vertiefung vorgesehen sein. Eine Oberfläche der Vertiefung kann eine erste Teilfläche und eine zweite Teilfläche aufweisen, welche unterschiedliche Oberflächeneigenschaften und/oder eine unterschiedliche Formgebung aufweisen können. Durch die unterschiedlichen Oberflächeneigenschaften und/oder die unterschiedliche Formgebung können die Teilflächen auf ihre unterschiedlichen Funktionen hin optimiert werden.

Die Oberfläche der Vertiefung kann auch mehr als zwei Teilflächen aufweisen, Jede der Teilflächen kann Oberflächeneigenschaften aufweisen, die sich von Oberflächeneigenschaften einer oder mehrerer der anderen Teilflächen unterscheiden. Es ist denkbar, dass die Oberflächeneigenschaften sich bzgl. der folgenden Eigenschaften unterscheiden: Rauheit, Rillen, Beschichtungsmaterialien und/oder -eigenschaften, Haftungsneigung (insbesondere Antihaft-Eigenschaften), Oleophilie bzw. Oleophobie, Lipophilie bzw. Lipophobie, Hydrophilie bzw. Hydrophobie.

Die erste und die zweite Teilfläche können durch eine, vorzugsweise imaginäre, Trennlinie getrennt sein. Die Trennlinie kann z. B. parallel zu der Rotationsachse orientiert sein. Dies kann vorteilhaft sein, da die Oberflächeneigenschaften an Anforderungen in verschiedenen Rotationsstellungen bzw. -bewegungen angepasst werden können. Es ist außerdem denkbar, dass die Trennlinie nicht geradlinig verläuft, bspw. wellenförmig.

Es ist denkbar, dass die erste Teilfläche relativ zu einer an sie angrenzenden Trennkante auf einer in eine Rotationsrichtung weisenden Seite der an die Vertiefung angrenzenden Trennkante liegt. Da die in die Rotationsrichtung weisende Seite der angrenzenden Trennkante stets auf die gleiche Weise mit der Teigmasse eingreift, kann so eine Optimierung der Oberflächeneigenschaften der ersten Teilfläche bzgl. dieses Eingreifens ermöglicht werden. Alternativ oder zusätzlich kann die zweite Teilfläche relativ zu einer an sie angrenzenden Trennkante auf einer entgegen einer Rotationsrichtung weisenden Seite der angrenzenden Trennkante liegen. Da die entgegen der Rotationsrichtung weisende Seite der angrenzenden Trennkante stets auf die gleiche Weise mit der Teigmasse eingreift, kann so eine Optimierung der Oberflächeneigenschaften der zweiten Teilfläche bzgl. dieses Eingreifens ermöglicht werden.

Die Erfindung bezieht sich auch auf eine Teigportioniervorrichtung umfassend einen Behälter und mindestens eine, vorzugsweise zwei, Portionierwalzen der vorstehend beschriebenen Art.

Die Erfindung bezieht sich auf Vorrichtungen und Verfahren der vorstehend beschriebenen Art. Im Folgenden werden Beispielhaft einige repräsentative Ausführungsformen anhand von Zeichnungen näher erläutert.
Figur 1 zeigt eine schematische Schnittansicht einer Teigportioniervorrichtung mit Portionierwalzen gemäß einem ersten Ausführungsbeispiel.
Figur 2 zeigt die Ansicht aus Figur 1, wobei die Portionierwalzen in einer anderen Rotationsposition dargestellt sind.
Figur 3 zeigt die Ansicht aus Figur 1 bzw. 2, wobei die Portionierwalzen in einer anderen Rotationsposition dargestellt sind.
Figur 4 zeigt die Teigportioniervorrichtung aus den Figuren 1-3 in einer schematischen Perspektivansicht.
Figur 5 zeigt schematische Schnittansicht einer Teigportioniervorrichtung mit Portionierwalzen gemäß einem weiteren Ausführungsbeispiel.
Figur 6 zeigt die Teigportioniervorrichtung aus der Figuren 5 in einer schematischen Perspektivansicht.
Figur 7 zeigt schematische Schnittansicht einer Teigportioniervorrichtung mit Portionierwalzen gemäß einem weiteren Ausführungsbeispiel.
Figur 8 zeigt eine Variante der Teigportioniervorrichtung aus Figur 7 in schematischer Perspektivansicht.
Figur 9 zeigt eine weitere Variante der Teigportioniervorrichtung aus Figur 7 in schematischer Perspektivansicht.

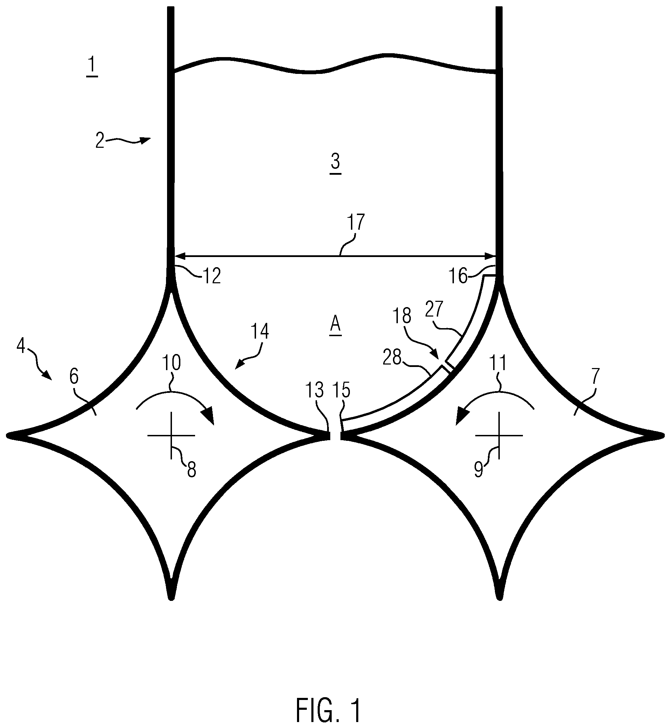

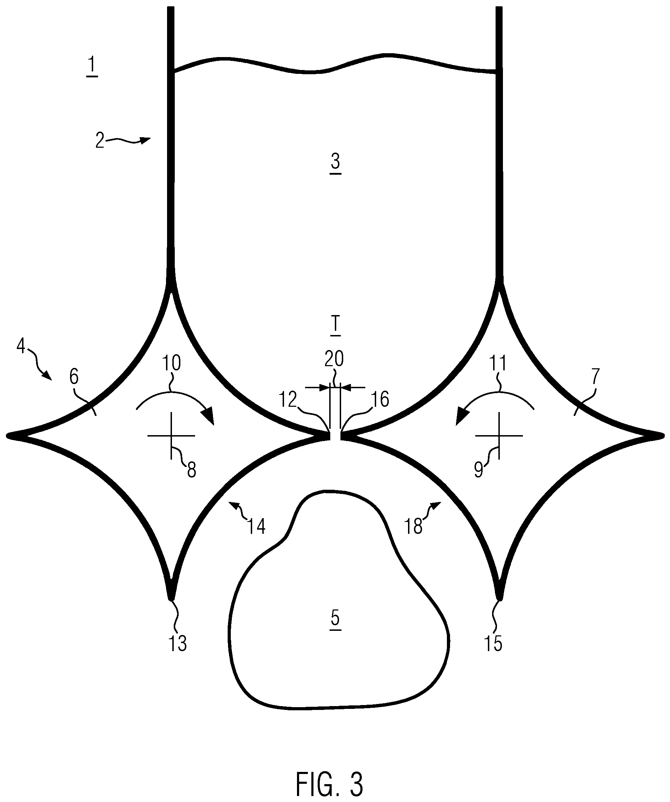

In Figur 1 ist eine Teigportioniervorrichtung 1 in einer schematischen Schnittansicht dargestellt. Die Teigportioniervorrichtung 1 kann einen Behälter 2 umfassen. Der Behälter 2 kann dazu konfiguriert sein, eine Teigmasse 3 aufzunehmen. Die Teigportioniervorrichtung 1 kann des Weiteren eine Portionierwalzenanordnung 4 umfassen. Die Portionierwalzenanordnung 4 kann zum Erzeugen von Teigportionen 5 (siehe Figur 3) aus der Teigmasse 3 zu erzeugen. Die Teigportioniervorrichtung 1, insbesondere die Portionierwalzenanordnung 4, kann eine erste Portionierwalze 6 umfassen. Die Teigportioniervorrichtung 1, insbesondere die Portionierwalzenanordnung 4, kann darüber hinaus eine zweite Portionierwalze 7 umfassen. Die erste Portionierwalze 6 kann um eine erste Rotationsachse 8 rotierbar gelagert bzw. lagerbar sein. Die zweite Portionierwalze 7 kann um eine zweite Rotationsachse 9 rotierbar gelagert bzw. lagerbar sein. Die erste Portionierwalze 6 kann in einer ersten Rotationsrichtung 10 um die erste Rotationsachse 8 rotierbar sein. Die zweite Portionierwalze 7 kann in einer zweiten Rotationsrichtung 11 um die zweite Rotationsachse 9 rotierbar sein. Die erste Rotationsrichtung 10 und die zweite Rotationsrichtung 11 können gegenläufig orientiert sein.

Jede der Portionierwalzen 6, 7 kann mehrere Trennkanten aufweisen. Jeweils zwischen zwei Trennkanten kann eine Vertiefung angeordnet sein. Die erste Portionierwalze 6 kann eine erste Trennkante 12 aufweisen. Des Weiteren kann die erste Portionierwalze 6 eine zweite Trennkante 13 aufweisen. Zwischen der ersten Trennkante 12 der ersten Portionierwalze 6 und der zweiten Trennkante 13 der ersten Portionierwalze 6 kann eine Vertiefung 14 angeordnet sein. Darüber hinaus kann die zweite Portionierwalze 7 eine erste Trennkante 15 aufweisen. Außerdem kann die zweite Portionierwalze 7 eine zweite Trennkante 16 aufweisen. Zwischen der ersten Trennkante 15 der zweiten Portionierwalze 7 und der zweiten Trennkante 16 der zweiten Portionierwalze 7 kann eine weitere Vertiefung 18 vorgesehen sein.

In Figur 1 sind die erste Portionierwalze 6 und die zweite Portionierwalze 7 in einer Aufnahmeposition A dargestellt. In der Aufnahmeposition A können die erste Trennkante 12 der ersten Portionierwalze 6 und die zweite Trennkante 16 der zweiten Portionierwalze 7 einen Aufnahmeabstand 17 zueinander aufweisen. Die Aufnahmeposition A kann ein Aufnehmen eines Teils der Teigmasse 3 in den Vertiefungen 14, 18 ermöglichen. Die Lücke zwischen der zweiten Trennkante 13 der ersten Portionierwalze 6 und der ersten Trennkante 15 der zweiten Portionierwalze 7 kann in Wirklichkeit sehr klein sein. Sie ist in Figur 1 zur besseren Erkennbarkeit der beiden Trennkanten vergrößert dargestellt.

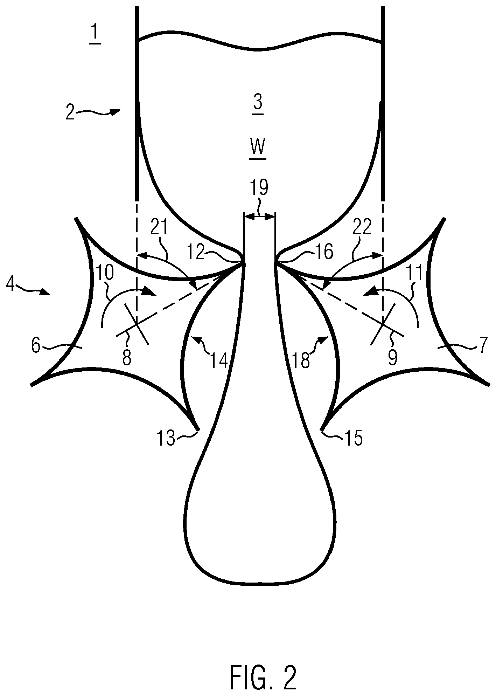

Figur 2 ist die Teigportioniervorrichtung 1 aus der gleichen Perspektive dargestellt. Allerdings sind die erste Portionierwalze 6 und die zweite Portionierwalze 7 in einer gegenüber Figur 1 rotierten Orientierung dargestellt. Die Konfiguration der ersten und der zweiten Portionierwalze 6, 7 die in Figur 2 dargestellt ist, wird im Folgenden als Warteposition W bezeichnet. In der Warteposition W können die erste Trennkante 12 der ersten Portionierwalze 6 und die zweite Trennkante 16 der zweiten Portionierwalze 7 einen Warteabstand 19 zueinander aufweisen. Nachdem die erste Portionierwalze 6 und die zweite Portionierwalze 7 von der Aufnahmeposition A in die Warteposition W rotiert wurden, können die Rotationsgeschwindigkeiten der Portionierwalzen 6, 7 reduziert werden. Darauf folgend kann eine Wartezeit abgewartet werden, wobei während der Wartezeit die Rotationsgeschwindigkeiten der ersten und der zweiten Portionierwalze 6, 7 reduziert bleiben können. Dadurch kann ein Ablösen der Teigmasse 3 aus den Vertiefungen 14, 18 abgewartet werden. Nachdem die Wartezeit abgewartet wurde, können die Rotationsgeschwindigkeiten der ersten Portionierwalze 6 und der zweiten Portionierwalze 7 wieder erhöht werden. Danach können die Portionierwalzen 6, 7 in eine Abtrennposition T rotiert werden, die in Figur 3 dargestellt ist.

In der Abtrennposition T können die erste Trennkante 12 der ersten Portionierwalze 6 und die zweite Trennkante 16 der zweiten Portionierwalze 7 einen Trennabstand 20 zueinander aufweisen. Der Trennabstand 20 kann sehr klein sein er ist in Figur 3 zur besseren Erkennbarkeit vergrößert dargestellt. Wie in den Figuren 1 bis 3 des Ausführungsbeispiels zu erkennen, kann der Aufnahmeabstand 17 größer sein als der Warteabstand 19. Der Warteabstand 19 kann größer sein als der Trennabstand 20. In Figur 3 ist außerdem zu erkennen, dass der Trennabstand 20 so klein sein kann, dass die Teigportion 15 aus der Teigmasse 3 vollständig abgetrennt wird. Durch das vorherige Abwarten des Ablösens des Teiges von den Vertiefungen 14, 18 kann eine höhere Reproduzierbarkeit des Herabfallens der Teigportion 5 erreichbar sein.

Die Wartezeit kann einstellbar sein, beispielsweise um verschiedene Teigkonsistenzen zu berücksichtigen. Die Wartezeit kann zum Beispiel höchstens 10 Sekunden, vorzugsweise höchstens 5 Sekunden, besonders bevorzugt 2 Sekunden betragen. Zwischen der Aufnahmeposition A und der Warteposition W kann die erste Portionierwalze 6 um einen ersten Winkel 21 rotiert werden. Die zweite Portionierwalze 7 kann zwischen der Aufnahmeposition A und der Warteposition W um einen zweiten Winkel 22 rotiert werden. Wie im vorliegenden Ausführungsbeispiel dargestellt, können der erste Winkel 21 und der zweite Winkel 22 gleich groß sein. Der erste Winkel kann 60° bis 80°, vorzugsweise 70° betragen. Das reduzieren der Rotationsgeschwindigkeiten der ersten Portionierwalze 6 und der zweiten Portionierwalze 7 kann zum Beispiel eine Reduktion um mehr als 50 %, vorzugsweise eine Reduktion um mehr als 80 %, besonders bevorzugt eine Reduktion um mehr als 90 % umfassen. Besonders günstig kann eine Reduktion der Rotationsgeschwindigkeiten der ersten Portionierwalze 6 und der zweiten Portionierwalze 7 um 100 % erfolgen, insbesondere können die Portionierwalzen 6, 7 angehalten werden.

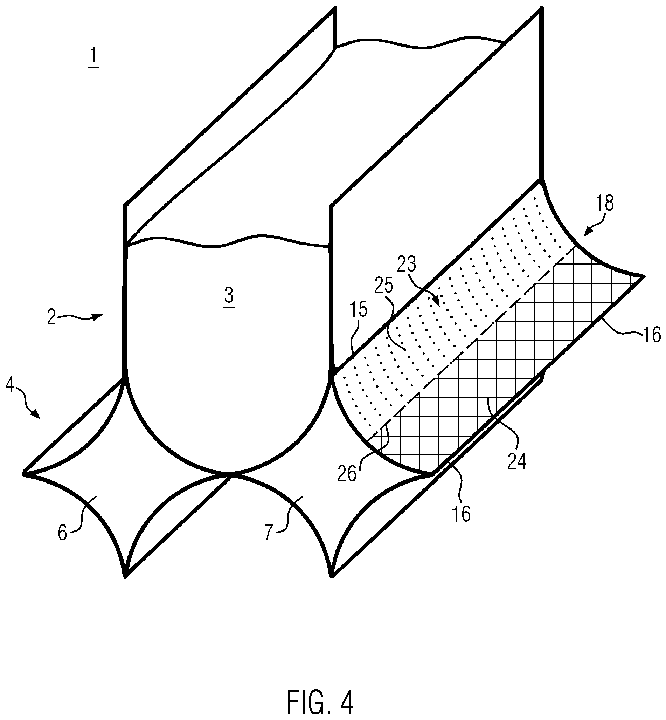

Im Folgenden soll näher auf die Vertiefungen 14, 18 eingegangen werden. Die folgenden Erläuterungen sind dabei beispielhaft für sämtliche Vertiefungen anzusehen. In Figur 4 ist eine perspektivische Ansicht der Teigportioniervorrichtung 1 dargestellt. Die Portionierwalzen 6, 7 sind in einer weiterrotierten Position dargestellt, sodass die Vertiefung 18 besser erkennbar ist. Die Vertiefung 18 kann eine Oberfläche 23 aufweisen. Die Oberfläche 23 kann eine erste Teilfläche 24 aufweisen. Die Oberfläche 23 kann des Weiteren eine zweite Teilfläche 25 aufweisen. Wie im vorliegenden Ausführungsbeispiel durch unterschiedliche Musterung angedeutet, können die erste Teilfläche 24 und die zweite Teilfläche 25 unterschiedliche Oberflächeneigenschaften aufweisen. Die erste Teilfläche 24 und die zweite Teilfläche 25 können durch eine in Figur 4 gestrichelt dargestellte, imaginäre Trennlinie 26 getrennt sein. Wie im Ausführungsbeispiel zu erkennen, kann die Trennlinie 26 parallel zu der zweiten Rotationsachse 9 orientiert sein.

Im Folgenden soll näher auf die Vertiefungen 14, 18 eingegangen werden. Die folgenden Erläuterungen sind dabei beispielhaft für sämtliche Vertiefungen anzusehen. In Figur 4 ist eine perspektivische Ansicht der Teigportioniervorrichtung 1 dargestellt. Die Portionierwalzen 6, 7 sind in einer weiterrotierten Position dargestellt, sodass die Vertiefung 18 besser erkennbar ist. Die Vertiefung 18 kann eine Oberfläche 23 aufweisen. Die Oberfläche 23 kann eine erste Teilfläche 24 aufweisen. Die Oberfläche 23 kann des Weiteren eine zweite Teilfläche 25 aufweisen. Wie im vorliegenden Ausführungsbeispiel durch unterschiedliche Musterung angedeutet, können die erste Teilfläche 24 und die zweite Teilfläche 25 unterschiedliche Oberflächeneigenschaften aufweisen. Die erste Teilfläche 24 und die zweite Teilfläche 25 können durch eine in Figur 4 gestrichelt dargestellte, imaginäre Trennlinie 26 getrennt sein. Wie im Ausführungsbeispiel zu erkennen, kann die Trennlinie 26 parallel zu der zweiten Rotationsachse 9 orientiert sein.

Es ist erkennbar, dass wenn die Portionierwalzen 6, 7 in der Aufnahmeposition A orientiert sind, stets die auf den entgegen der jeweiligen Rotationsrichtung 10, 11 weisenden Seite liegenden Teilflächen, nämlich die zweiten Teilflächen 25, einen Hauptteil des Gewichts der Teigmasse 3 stützen. Daher kann es vorteilhaft sein, auf diesen Teilflächen Oberflächeneigenschaften vorzusehen, die sich von den ersten Teilflächen unterscheiden.

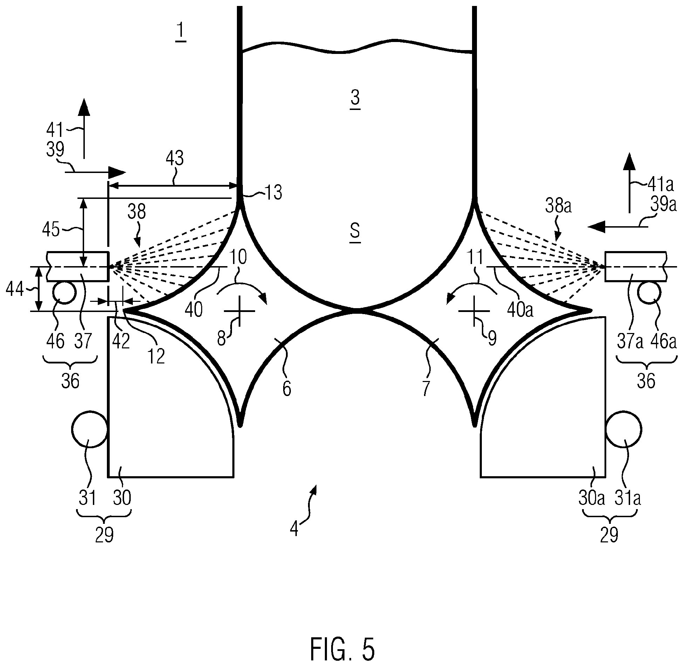

Figur 5 zeigt eine schematische Schnittansicht eines weiteren Ausführungsbeispiels. Gleiche Bezugszeichen bezeichnen gleiche Strukturen. Im Unterschied zu dem weiter oben beschriebenen Ausführungsbeispiel kann die Portionierwalzenanordnung 4, wie in Figur 5 dargestellt, eine Abstreifvorrichtung 29 umfassen. Die Abstreifvorrichtung 29 kann einen Abstreifer 30 umfassen. Die Abstreifvorrichtung 29 kann des Weiteren einen Abstreifantrieb 31 umfassen. Der Abstreifantrieb 31 kann dazu konfiguriert sein, den Abstreifer 30 entlang der ersten Portionierwalze 6 zu bewegen. Wie im vorliegenden Ausführungsbeispiel dargestellt, kann die Abstreifvorrichtung 29 einen zweiten Abstreifer 30a umfassen. Die Abstreifrichtung 120 kann des Weiteren einen zweiten Abstreifantrieb 31a umfassen. Der zweite Abstreifantrieb 31a kann dazu konfiguriert sein, den zweiten Abstreifer 30a entlang der zweiten Portionierwalze 7 zu bewegen. Der zweite Abstreifer 30a mit dem zweiten Abstreifantrieb 31a kann analog zu dem Abstreifer 30 mit dem Abstreifantrieb 31 konfiguriert sein. Um Wiederholungen zu vermeiden, wird im Folgenden lediglich der Abstreifer 30 und der Abstreifantrieb 31 erläutert. Sämtliche Angaben sind jedoch auch auf den zweiten Abstreifer 30a bzw. den zweiten Abstreifantrieb 31a anwendbar.

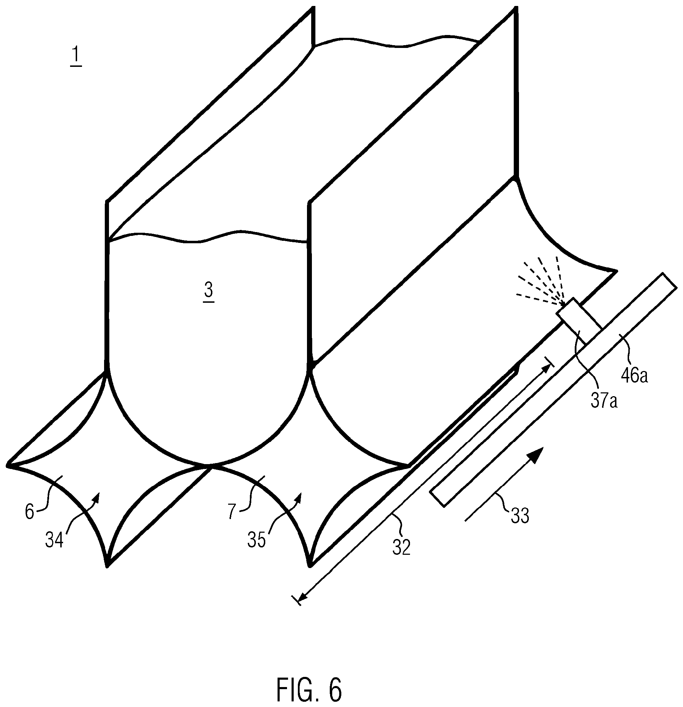

Der Abstreifer 30 kann dazu konfiguriert sein, in eine der Vertiefungen 14 der ersten Portionierwalze 6 einzugreifen. D.h. die Form des Abstreifers 30 kann an die Formgebung der Vertiefungen 14 angepasst sein. Der Abstreifer 30 kann innerhalb eines Verschiebebereich 32 (siehe Figur 6) des Abstreifantriebs 31 verschiebbar sein. Wie im vorliegenden Ausführungsbeispiel dargestellt, kann der Verschiebebereich 32 in einer Verschieberichtung 33, die parallel zu der ersten Rotationsachse 8 und oder der zweiten Rotationsachse 9 orientiert sein kann, länger sein als die erste und oder die zweite Portionierwalze 6, 7. Insbesondere kann der Verschiebebereich 32 über Stirnseiten 34 bzw. 35 der ersten Portionierwalze 6 bzw. der zweiten Portionierwalze 7 hinaus verschiebbar sein.

Die Portionierwalzenanordnung 4 kann, wie im Ausführungsbeispiel dargestellt, eine Trennmittelaufbringvorrichtung 36 umfassen. Die Trennmittelaufbringvorrichtung 36 kann eine Düse 37 umfassen. Die Trennmittelaufbringvorrichtung kann dazu konfiguriert sein, ein Trennmittel auf eine der Oberflächen 23 der Vertiefungen 14, 18 aufzubringen. Die Düse 37 kann dazu konfiguriert sein, einen Sprühkegel 38 zu erzeugen. Insbesondere kann die Düse 37 dazu konfiguriert sein, Trennmittel in einer Sprührichtung 39 zu versprühen. Als Sprührichtung 39 kann eine Richtung angesehen werden, die parallel zu einer Sprühkegelachse 40 orientiert ist. Eine orthogonal zu der Sprührichtung 39 orientierte Richtung wird im Folgenden als Querrichtung 41 bezeichnet.

In Figur 5 ist die Portionierwalzenanordnung in einer Sprühposition S dargestellt. Die Sprühposition S ist die Position, in der die Portionierwalzen 6, 7 mit Trennmittel besprüht werden können. Sind die Portionierwalzen 6, 7 in dieser Sprühposition S angeordnet, kann die Düse 37 einen in der Sprührichtung 39 gemessenen ersten Abstand 42 von der ersten Trennkante 12 der ersten Portionierwalze 6 aufweisen. Von der zweiten Trennkante 13 der ersten Portionierwalze 6 kann die Düse 37 einen ebenfalls in der Sprührichtung 39 gemessenen zweiten Abstand 43 aufweisen. Der erste Abstand 42 kann kleiner sein als der zweite Abstand 43. In der Querrichtung 41 gemessenen kann die Düse einen ersten Querabstand 44 von der ersten Trennkante 12 aufweisen. Von der zweiten Trennkante 13 kann die Düse 37 einen zweiten Querabstand 45 aufweisen. Der erste Querabstand 44 kann kleiner sein als der zweite Querabstand 45.

Die Trennmittelaufbringvorrichtung 36 kann des Weiteren eine zweite Düse 37a umfassen. Alle weiter oben auf die Düse 37 bezogenen Erläuterungen können auch auf die zweite Düse 37a anwendbar sein.

Die Trennmittelaufbringvorrichtung 36 kann einen Düsenantrieb 46 aufweisen. Der Düsenantrieb 46 kann dazu konfiguriert sein, die Düse 37 entlang der ersten Portionierwalze 46 zu bewegen. Analog dazu kann die Trennmittelaufbringvorrichtung 36 einen zweiten Düsenantrieb 46a umfassen, der dazu konfiguriert sein kann, die zweite Düse 37a entlang der zweiten Portionierwalze 7 zu bewegen. Bei sämtlichen Düsenantrieben und Abstreifantrieben kann es sich um Gewindespindelantriebe oder Zylinderantriebe, insbesondere Pneumatikzylinderantriebe, oder Kombinationen daraus handeln.

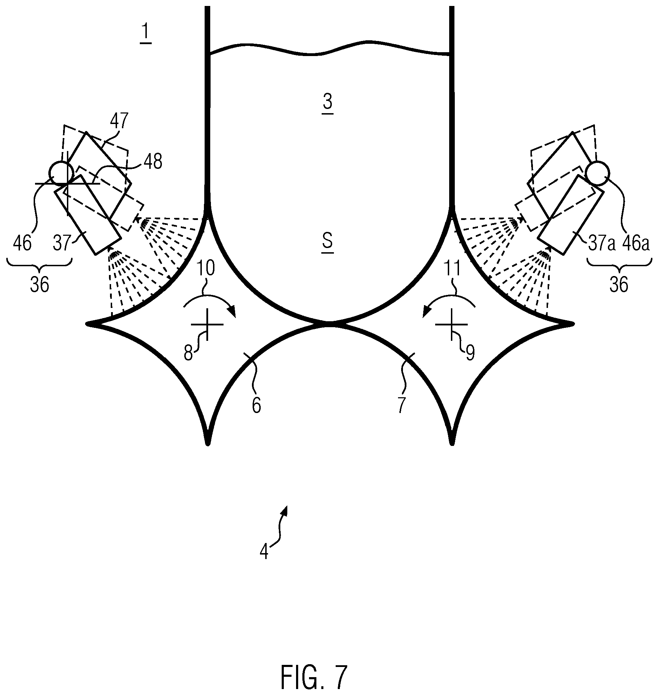

In den Figuren 7 bis 9 ist ein weiteres Ausführungsbeispiel der Teigportioniervorrichtung 1 dargestellt. Gleiche Bezugszeichen beziehen sich wiederum auf gleiche Strukturen. In Figur 7 ist eine schematische Schnittansicht der Teigportioniervorrichtung 1 dargestellt. Ähnlich dem weiter oben mit Bezug auf Figur 5 und Figur 6 erläuterten Ausführungsbeispiel kann die Teigportioniervorrichtung 1 gemäß dem in Figur 7 dargestellten Ausführungsbeispiel eine Trennmittelaufbringvorrichtung 36 umfassen. Ebenfalls ähnlich dem mit Bezug auf Figur 5 erläuterten Ausführungsbeispiel kann die Trennmittelaufbringvorrichtung 36 eine Düse 37 und einen Düsenantrieb 46 umfassen.

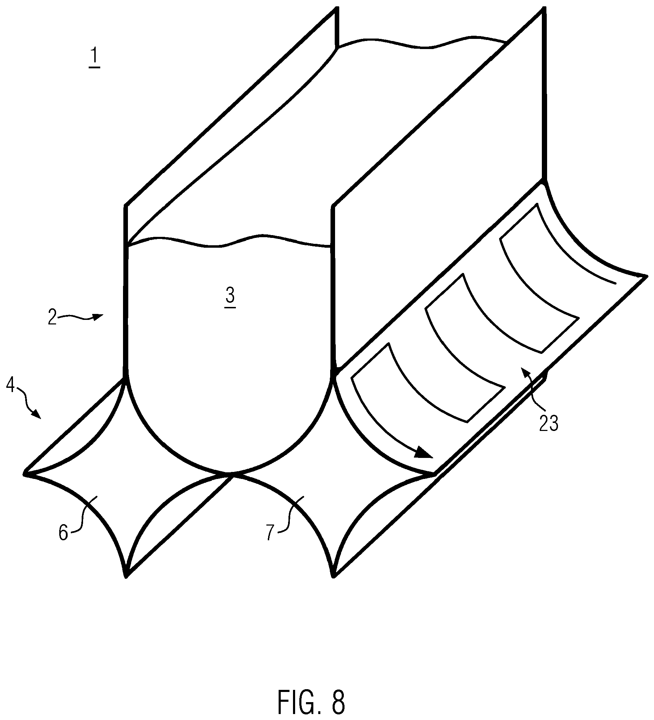

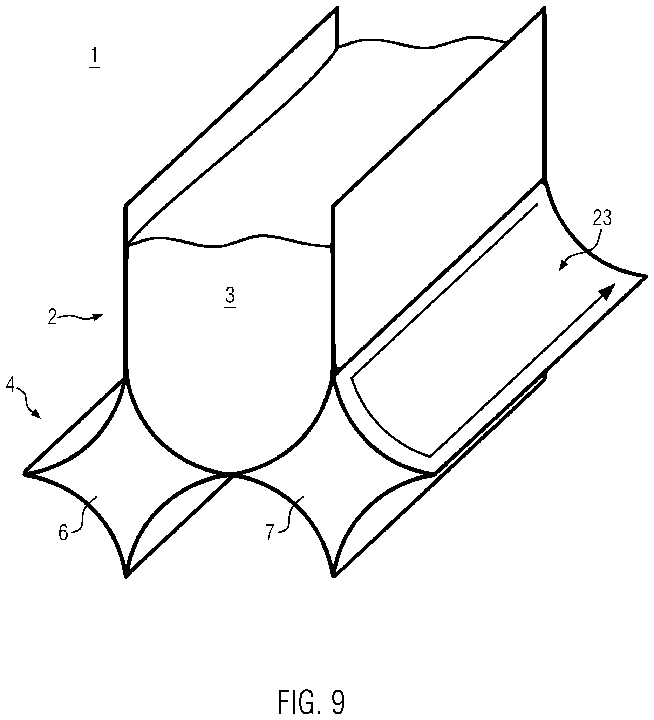

Im Unterschied zu dem vorher erläuterten Ausführungsbeispiel kann die Düse 37 im vorliegenden Ausführungsbeispiel schwenkbar sein. Dazu kann die Trennmittelaufbringvorrichtung 36 einen Schwenkantrieb 47 aufweisen. Das Schwenken der Düse 37 kann um eine Schwenkachse 48 erfolgen, die parallel zu der ersten Rotationsachse 8 orientiert sein kann. Wie in Figur 7 zu erkennen, kann auch in diesem Ausführungsbeispiel eine analog zur Düse 37 ausgeführte zweite Düse 37a vorgesehen sein. Die Düse 37 kann abwechselnd um die Schwenkachse 48 geschwenkt und entlang der ersten Portionierwalze 6 verschoben werden, um die gesamte Oberfläche 23 der Vertiefung 14 mit Trennmittel zu benetzen. Dabei sind unterschiedliche Bewegungssequenzen denkbar, die beispielhaft in den Figuren 8 und 9 dargestellt sind (aufgrund der besseren Sichtbarkeit anhand der zweiten Portionierwalze 7).

In Figur 8 wird ein Bewegungsschema angedeutet, in dem die Düsen 37, 37a nach einem Schwenken verschoben wird und nach einem weiteren Schwenken weiter in dieselbe Richtung verschoben wird. In Figur 9 ist ein Bewegungsschema dargestellt, in dem die Düsen 37, 37a vor und nach dem Schwenken entlang der gesamten axialen Länge der jeweiligen Portionierwalze 6, 7 verschoben wird dabei ist die Verschieberichtung vor dem Schwenken der Verschieberichtung nach dem schwenken entgegengesetzt orientiert.

Die oben erläuterten Ausführungsformen und insbesondere die dort beschriebenen Merkmalskombinationen sind beispielhaft zu verstehen. Ein Fachmann wird erkennen, dass im Rahmen der Beschreibung verschiedener Ausführungsformen offenbarte Merkmale kombinierbar sein können.

## Patentansprüche

1. Portionierwalzenanordnung (4), die zum Erzeugen von Teigportionen (5) aus einer Teigmasse (3) konfiguriert ist, umfassend:
eine erste Portionierwalze (6), die mehrere Trennkanten (12, 13) aufweist und um eine erste Rotationsachse (8) rotierbar gelagert ist, sowie eine zweite Portionierwalze (7), die mehrere Trennkanten (15, 16) aufweist und um eine zweite Rotationsachse (9) rotierbar gelagert ist, wobei die erste und/oder die zweite Portionierwalze (6, 7) jeweils eine Vielzahl von Vertiefungen (14, 18) aufweist, die jeweils zwischen zwei Trennkanten (12,13,15, 16) vorgesehen sind,
eine Trennmittelaufbringvorrichtung (36) die dazu konfiguriert ist, ein Trennmittel auf eine Oberfläche (23) einer Vertiefung (14) der Vielzahl von Vertiefungen (14) der ersten Portionierwalze (6) aufzubringen, wobei die Trennmittelaufbringvorrichtung (36) eine Düse (37) umfasst, die dazu konfiguriert ist, einen Sprühkegel (38) zu erzeugen, wobei die Düse (37), wenn die erste Portionierwalze (6) in einer Sprühposition (S) angeordnet ist, einen in einer Sprührichtung (39), die parallel zu einer Sprühkegelachse (40) des Sprühkegels (38) orientiert ist, gemessenen ersten Abstand (42) von einer ersten die Vertiefung (14) begrenzenden Trennkante (12) aufweist, der kleiner ist als ein zweiter in der Sprührichtung (39) gemessener Abstand (43) der Düse (37) von einer zweiten die Vertiefung (14) begrenzenden Trennkante (13), und
wobei die Düse (37), wenn die erste Portionierwalze (6) in der Sprühposition (S) angeordnet ist, einen in einer Querrichtung (41), die orthogonal zu der Sprührichtung (39) orientiert ist, gemessenen ersten Querabstand (44) von der ersten die Vertiefung (14) begrenzenden Trennkante (12) aufweist, der kleiner ist als ein zweiter in der Querrichtung (41) gemessener Querabstand (45) der Düse (37) von der zweiten die Vertiefung (14) begrenzenden Trennkante (13).

2. Portionierwalzenanordnung nach Anspruch 1, wobei das Verhältnis des zweiten in der Sprührichtung (39) gemessenen Abstands (42) zu dem ersten in der Sprührichtung (39) gemessenen Abstand (43) größer als 1,5, bevorzugt größer als 2,5, besonders bevorzugt größer als 3 ist.

3. Portionierwalzenanordnung nach Anspruch 1 oder 2, wobei das Verhältnis des zweiten in der Querrichtung (41) gemessenen Querabstands (44) zu dem ersten in der Querrichtung (41) gemessenen Querabstand (45) größer als 1,25, bevorzugt größer als 2, besonders bevorzugt größer als 2,3 ist.

4. Portionierwalzenanordnung nach einem der vorangehenden Ansprüche, des Weiteren umfassend eine Abstreifvorrichtung (29), die einen Abstreifer (30, 30a) und einen Abstreifantrieb (31, 31a) umfasst, wobei der Abstreifantrieb (31, 31a) dazu konfiguriert ist, den Abstreifer (30, 30a) entlang der ersten Portionierwalze (6) und/oder der zweiten Portionierwalze (7) zu bewegen.

5. Portionierwalzenanordnung nach Anspruch 4, wobei der Abstreifer (30, 30a) dazu konfiguriert ist, in eine der Vielzahl von Vertiefungen (14, 18) einzugreifen.

6. Portionierwalzenanordnung nach einem der Ansprüche 4 oder 5, wobei ein Verschiebebereich (32) des Abstreifantriebs (31, 31a), in dem der Abstreifer (30, 30a) bewegbar ist, in einer Verschieberichtung (33) parallel zu der Rotationsachse (8, 9) länger ist als die erste und/oder die zweite Portionierwalze (6, 7).

7. Portionierwalzenanordnung nach einem der Ansprüche 4 bis 6, wobei der Abstreifer (30, 30a) über beide gegenüberliegenden Stirnseiten (34, 35) der ersten und/oder zweiten Portionierwalze (6, 7) hinaus verschiebbar ist.

8. Portionierwalzenanordnung nach einem der Ansprüche 4 bis 7, wobei die Portionierwalzenanordnung (4) dazu konfiguriert ist, das Trennmittel auf die Oberfläche (23) einer Vertiefung (14) der Vielzahl von Vertiefungen (14, 18) aufzubringen, nachdem der Abstreifer (30, 30a) entlang dieser Vertiefung (14) bewegt wurde.

9. Teigportioniervorrichtung (1), umfassend einen Behälter (2) und eine Portionierwalzenanordnung (4) nach einem der vorangehenden Ansprüche.

## Claims

1. Portioning roller assembly (4) configured to generate dough portions (5) from a dough mass (3) comprising:
a first portioning roller (6) having a plurality of severing edges (12, 13) and being supported rotatably around a first rotation axis (8) as well as a second portioning roller (7) having a plurality of severing edges (15, 16) and being supported rotatably around a second rotation axis (9), wherein the first and/or the second portioning roller (6, 7) each have plurality of depressions (14, 18), which are each disposed between two severing edges (12, 13, 15, 16),
a separating agent applicator (36) configured to apply a separating agent onto a surface (23) of a depression (14) of the plurality of depressions (14) of the first portioning roller (6), wherein the separating agent applicator (36) comprises a nozzle (37) configured to generate a spraying cone (38), wherein when the first portioning roller (6) is disposed in a spraying position (S), the nozzle (37) is spaced from a first severing edge (12) delimiting the depression (14) by a first distance (42) measured in a spraying direction (39) oriented in parallel to a spraying cone axis (40) of the spraying cone (38), which is smaller than a second distance (43) measured in the spraying direction (39) of the nozzle (37) from a second severing edge (13) delimiting the depression (14), and
wherein when the first portioning roller (6) is disposed in a spraying position (S), the nozzle (37) is spaced from the first severing edge (12) delimiting the depression (14) by a first transverse distance (44) measured in a transverse direction (41) oriented orthogonally with respect to the spraying direction (39), which is smaller than a second transverse distance (45) measured in the transverse direction (41) of the nozzle (37) from the second severing edge (13) delimiting the depression (14).

2. Portioning roller assembly according to claim 1, wherein the ratio between the second distance (42) measured in the spraying direction (39) and the first distance (43) measured in the spraying direction (39) is greater than 1.5, preferably greater than 2.5, particularly preferred greater than 3.

3. Portioning roller assembly according to claim 1 or 2, wherein the ratio between the second transverse distance (44) measured in the transverse direction (41) and the first transverse distance (45) measured in the transverse direction (41) is greater than 1.25, preferably greater than 2, particularly preferred greater than 2.3.

4. Portioning roller assembly according to one of the preceding claims, further comprising a stripper assembly (29) comprising a stripper (30, 30a) and a stripper drive (31, 31a), wherein the stripper drive (31, 31a) is configured to move the stripper (30, 30a) along the first portioning roller (6) and/or the second portioning roller (7).

5. Portioning roller assembly according to claim 4, wherein the stripper (30, 30a) is configured to engage in one of the plurality of depressions (14, 18).

6. Portioning roller assembly according to one of claims 4 or 5, wherein a shifting range (32) of the stripper drive (31, 31a), in which the stripper (30, 30a) is movable, is longer than the first and/or the second portioning roller (6, 7) in a shifting direction (33) oriented parallel to the rotation axis (8, 9).

7. Portioning roller assembly according to one of claims 4 to 6, wherein the stripper (30, 30a) is movable beyond both opposing front faces (34, 35) of the first and/or the second portioning roller (6, 7).

8. Portioning roller assembly according to one of claims 4 to 8, wherein the portioning roller assembly (4) is configured to apply the separating agent onto the surface (23) of a depression (14) of the plurality of depressions (14, 18) after the stripper (30, 30a) has been moved along this depression (14).

9. Dough portioning device (1) comprising a container (2) and a portioning roller assembly (4) according to one of the preceding claims.

## Revendications

1. Ensemble de rouleaux portionneurs (4) configuré pour produire des portions de pâte (5) à partir d'une masse de pâte (3), comprenant :
un premier rouleau portionneur (6) qui présente plusieurs arêtes de séparation (12, 13) et qui est monté de manière à pouvoir tourner autour d'un premier axe de rotation (8), ainsi qu'un deuxième rouleau portionneur (7) qui présente plusieurs arêtes de séparation (15, 16) et qui est monté de manière à pouvoir tourner autour d'un deuxième axe de rotation (9), le premier et/ou le deuxième rouleau portionneur (6, 7) présentant chacun une pluralité d'évidements (14, 18) qui sont respectivement prévus entre deux arêtes de séparation (12, 13, 15, 16),
un dispositif d'application d'agent de démoulage (36) configuré pour appliquer un agent de démoulage sur une surface (23) d'un évidement (14) de la pluralité d'évidements (14) du premier rouleau portionneur (6), le dispositif d'application d'agent de démoulage (36) comprenant une buse (37) configurée pour produire un cône de pulvérisation (38), dans lequel la buse (37), lorsque le premier rouleau portionneur (6) est placé dans une position de pulvérisation (S), présente une première distance (42) mesurée dans une direction de pulvérisation (39) qui est orientée parallèlement à un axe de cône de pulvérisation (40) du cône de pulvérisation (38), par rapport à une première arête de séparation (12) délimitant l'évidement (14), qui est inférieure à une deuxième distance (43), mesurée dans la direction de pulvérisation (39) de la buse (37) par rapport à une deuxième arête de séparation (13) délimitant l'évidement (14), et
dans lequel la buse (37) lorsque le premier rouleau portionneur (6) est disposé dans la position de pulvérisation (S), présente une première distance transversale (44) mesurée dans une direction transversale (41) orientée orthogonalement à la direction de pulvérisation (39), par rapport à la première arête de séparation (12) délimitant l'évidement (14), qui est inférieure à une deuxième distance transversale (45) mesurée dans la direction transversale (41) de la buse (37) par rapport à la deuxième arête de séparation (13) délimitant l'évidement (14).

2. Ensemble de rouleaux portionneurs selon la revendication 1, le rapport entre la deuxième distance (42) mesurée dans la direction de pulvérisation (39) et la première distance (43) mesurée dans la direction de pulvérisation (39) étant supérieur à 1,5, de préférence supérieur à 2,5, de manière particulièrement préférée supérieur à 3.

3. Ensemble de rouleaux portionneurs selon la revendication 1 ou 2, le rapport entre la deuxième distance transversale (44) mesurée dans la direction transversale (41) et la première distance transversale (45) mesurée dans la direction transversale (41) étant supérieur à 1,25, de préférence supérieur à 2, de manière particulièrement préférée supérieur à 2,3.

4. Ensemble de rouleaux portionneurs selon l'une quelconque des revendications précédentes, comprenant en outre un dispositif de raclage (29) comprenant un racloir (30, 30a) et un entraînement de raclage (31, 31a), l'entraînement de raclage (31, 31a) étant configuré pour déplacer le racloir (30, 30a) le long du premier rouleau portionneur (6) et/ou du deuxième rouleau portionneur (7).

5. Ensemble de rouleaux portionneurs selon la revendication 4, dans lequel le racloir (30, 30a) est configuré pour s'engager dans l'un de la pluralité d'évidements (14, 18).

6. Ensemble de rouleaux portionneurs selon l'une des revendications 4 ou 5, dans lequel une zone de déplacement (32) de l'entraînement de raclage (31, 31a) dans laquelle le racloir (30, 30a) est mobile, est plus longue que le premier et/ou le deuxième rouleau portionneur (6, 7) dans une direction de déplacement (33) parallèle à l'axe de rotation (8, 9).

7. Ensemble de rouleaux portionneurs selon l'une quelconque des revendications 4 à 6, dans lequel le racloir (30, 30a) peut être déplacé au-delà des deux faces opposées (34, 35) du premier et/ou du deuxième rouleau portionneur (6, 7).

8. Ensemble de rouleaux portionneurs selon l'une quelconque des revendications 4 à 7, dans lequel l'ensemble de rouleaux portionneurs (4) est configuré pour appliquer l'agent de démoulage sur la surface (23) d'un évidement (14) de la pluralité d'évidements (14, 18) après que le racloir (30, 30a) a été déplacé le long de cet évidement (14).

9. Dispositif de portionnement de pâte (1) comprenant un récipient (2) et un ensemble de rouleaux portionneurs (4) selon l'une quelconque des revendications précédentes.
